# EUROPEAN PATENT SPECIFICATION

(11) **EP 4 542 543 B1**
(45) Date of publication and mention of the grant of the patent: **21.10.2026**
(21) Application number: 24207578.6
(22) Date of filing: 18.10.2024
(51) Int. Cl.: G10L 15/26, G10L 25/30, G10L 15/22

(54) **SYSTEM AND METHOD FOR DIGITAL ASSISTANCE THROUGH A DISPLAY DEVICE**
SYSTEM UND VERFAHREN ZUR DIGITALEN UNTERSTÜTZUNG DURCH EINE ANZEIGEVORRICHTUNG
SYSTÈME ET PROCÉDÉ D'ASSISTANCE NUMÉRIQUE PAR L'INTERMÉDIAIRE D'UN DISPOSITIF D'AFFICHAGE

(30) Priority: 18.10.2023 US 202318381580
(43) Date of publication of application: 23.04.2025
(73) Proprietor: Mitel Networks Corporation, Ottawa, Ontario K2K 3K1 (CA)
(72) Inventor: Braganza, Jonathan, Ottawa, K2E 6P2 (CA); Naidoo, Logendra, Ottawa, K1S 0W8 (CA); Chugh, Vikram, 560020 Bangalore (IN)
(74) Representative: McDougall, James

(56) References cited:
- WO-A1-2019/017922
- US-A1- 2016 011 729
- US-A1- 2018 122 371
- US-A1- 2023 289 836
- US-B2- 11 403 961

## Description

### FIELD

The present disclosure generally relates to systems and methods for digital assistance for presenters through a display device, and more particularly to systems and methods for generating real-time information to presenters for training and/or for use during presenting.

### BACKGROUND

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches, which in and of themselves may be inventions.

When presenting in a meeting or conference, a speaker is required to deliver a message to an audience. Sometimes this can be a daunting task as the presenter must memorize either the entire presentation or key points which they must then transform into the presentation. In a large setting, a teleprompter can be used to provide a script to the presenter, but use of a teleprompter generally requires additional equipment for the presentation room or area. Accordingly, improved systems and methods for generating real-time feedback and recommendations for use by presenters during a presentation or during preparation for a presentation may be desirable.

US 11 403 961 B2 discloses a computer system in which a presentation is recorded using a microphone and video capture device. A first feature of the presentation is extracted based on data from the microphone and video capture device while recording the presentation. A metric is calculated based on the first feature. A score is generated based on the metric. The score is displayed on the display monitor of the computer system after recording the presentation.

### SUMMARY

The invention is defined by the claims.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1A illustrates a venue for giving a speech or a presentation with a system for digital assistance in accordance with various embodiments.
FIG. 1B illustrates a schematic view of a system for digital assistance, in accordance with various embodiments.
FIG. 2 illustrates a process performed by the system from FIGs. 1A and 1B, in accordance with various embodiments.
FIG. 3 illustrates a graphical user interface on a display device during operation of the system from FIGs. 1A and 1B, in accordance with various embodiments.
FIG. 4 illustrates a graphical user interface on a display device during operation of the system from FIGs. 1A and 1B, in accordance with various embodiments.
FIG. 5 illustrates a process performed by the system from FIGs. 1A and 1B, in accordance with various embodiments.
FIG. 6 illustrates a process performed by the system from FIGs. 1A and 1B, in accordance with various embodiments.
FIG. 7 illustrates a process performed by the system from FIGs. 1A and 1B, in accordance with various embodiments.

### DETAILED DESCRIPTION

The following detailed description of various embodiments herein refers to the accompanying drawings. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Terms and phrases similar to "associate" and/or "associating" may include tagging, flagging, correlating, using a look-up table or any other method or system for indicating or creating a relationship between elements, such as, for example, (i) a presentation account and (ii) an item (e.g., a research article, a written speech, notes on the planned speech, or the like). Moreover, the associating may occur at any point, in response to any suitable action, event, or period of time. The associating may occur at predetermined intervals, periodically, randomly, once, more than once, or in response to a suitable request or action. Any of the information may be distributed and/or accessed via a software enabled link, wherein the link may be sent via an email, text, post, social network input, and/or any other method.

The process flows and screenshots depicted are merely embodiments and are not intended to limit the scope of the disclosure. For example, the steps recited in any of the method or process descriptions may be executed in any order and are not limited to the order presented. It will be appreciated that the following description makes appropriate references not only to the steps and user interface elements, but also to the various system components as described herein. It should be understood that, although exemplary embodiments are illustrated in the figures and described herein, the principles of the present disclosure may be implemented using any number of techniques, whether currently known or not. The present disclosure should in no way be limited to the exemplary implementations and techniques illustrated in the drawings and described below. Unless otherwise specifically noted, articles depicted in the drawings are not necessarily drawn to scale.

Computer programs (also referred to as computer control logic) can be stored in main memory and/or secondary memory. Computer programs may also be received via communications interface. Such computer programs, when executed, enable the computer system to perform the features as discussed herein. In particular, the computer programs, when executed, enable the processor to perform the features of various embodiments. Accordingly, such computer programs represent controllers of the computer system.

These computer program instructions may be loaded onto a general purpose computer, special purpose computer, or other programmable data processing apparatus to produce a machine, such that the instructions that execute on the computer or other programmable data processing apparatus create means for implementing the functions specified in the flowchart block or blocks. These computer program instructions may also be stored in a computer-readable memory that can direct a computer or other programmable data processing apparatus to function in a particular manner, such that the instructions stored in the computer-readable memory produce an article of manufacture including instruction means which implement the function specified in the flowchart block or blocks. The computer program instructions may also be loaded onto a computer or other programmable data processing apparatus to cause a series of operational steps to be performed on the computer or other programmable apparatus to produce a computerimplemented process such that the instructions which execute on the computer or other programmable apparatus provide steps for implementing the functions specified in the flowchart block or blocks.

In various embodiments, software may be stored in a computer program product and loaded into a computer system using a removable storage drive, hard disk drive, or communications interface. The control logic (software), when executed by the processor, causes the processor to perform the functions of various embodiments as described herein. In various embodiments, hardware components may take the form of application specific integrated circuits (ASICs). Implementation of the hardware so as to perform the functions described herein will be apparent to persons skilled in the relevant art(s).

As will be appreciated by one of ordinary skill in the art, the system disclosed herein may be embodied as a customization of an existing system, an add-on product, a processing apparatus executing upgraded software, a stand-alone system, a distributed system, a method, a data processing system, a device for data processing, and/or a computer program product. Accordingly, any portion of the system or a module may take the form of a processing apparatus executing code, an internet-based embodiment, an entirely hardware-based embodiment, or an embodiment combining aspects of the internet, software, and hardware. Furthermore, the system may take the form of a computer program product on a computer-readable storage medium having computer-readable program code means embodied in the storage medium. Any suitable computer-readable storage medium may be utilized, including hard disks, optical storage devices, magnetic storage devices, and/or the like.

The system and method may be described herein in terms of functional block components, screen shots, optional selections, and various processing steps. It should be appreciated that such functional blocks may be realized by any number of hardware and/or software components configured to perform the specified functions. For example, the system may employ various integrated circuit components, e.g., memory elements, processing elements, logic elements, look-up tables, and the like, which may carry out a variety of functions under the control of one or more microprocessors or other control devices. Similarly, the software elements of the system may be implemented with any programming or scripting language such as C, C++, C#, JAVA^{®}, JAVASCRIPT^{®}, JAVASCRIPT^{®} Object Notation (JSON), VBScript, Macromedia COLD FUSION, COBOL, MICROSOFT^{®} company's Active Server Pages, assembly, PERL^{®}, PHP, awk, PYTHON^{®}, Visual Basic, SQL Stored Procedures, PL/SQL, any UNIX^{®} shell script, and extensible markup language (XML) with the various algorithms being implemented with any combination of data structures, objects, processes, routines or other programming elements. Further, it should be noted that the system may employ any number of techniques for data transmission, signaling, data processing, network control, and the like. Still further, the system could be used to detect or prevent security issues with a client-side scripting language, such as JAVASCRIPT^{®}, VBScript, or the like.

The system and method are described herein with reference to screen shots, block diagrams and flowchart illustrations of methods, apparatus, and computer program products according to various embodiments. It will be understood that each functional block of the block diagrams and the flowchart illustrations, and combinations of functional blocks in the block diagrams and flowchart illustrations, respectively, can be implemented by computer program instructions.

Accordingly, functional blocks of the block diagrams and flowchart illustrations support combinations of means for performing the specified functions, combinations of steps for performing the specified functions, and program instruction means for performing the specified functions. It will also be understood that each functional block of the block diagrams and flowchart illustrations, and combinations of functional blocks in the block diagrams and flowchart illustrations, can be implemented by either special purpose hardware-based computer systems which perform the specified functions or steps, or suitable combinations of special purpose hardware and computer instructions. Further, illustrations of the process flows and the descriptions thereof may make reference to user WINDOWS^{®} applications, webpages, websites, web forms, prompts, etc. Practitioners will appreciate that the illustrated steps described herein may comprise, in any number of configurations, including the use of WINDOWS^{®} applications, webpages, web forms, popup WINDOWS^{®} applications, prompts, and the like. It should be further appreciated that the multiple steps as illustrated and described may be combined into single webpages and/or WINDOWS^{®} applications but have been expanded for the sake of simplicity. In other cases, steps illustrated and described as single process steps may be separated into multiple webpages and/or WINDOWS^{®} applications but have been combined for simplicity.

In various embodiments, the software elements of the system may also be implemented using a JAVASCRIPT^{®} run-time environment configured to execute JAVASCRIPT^{®} code outside of a web browser. For example, the software elements of the system may also be implemented using NODE.JS^{®} components. NODE.JS^{®} programs may implement several modules to handle various core functionalities. For example, a package management module, such as NPM^{®}, may be implemented as an open-source library to aid in organizing the installation and management of third-party NODE.JS^{®} programs. NODE.JS^{®} programs may also implement a process manager, such as, for example, Parallel Multithreaded Machine ("PM2"); a resource and performance monitoring tool, such as, for example, Node Application Metrics ("appmetrics"); a library module for building user interfaces, and/or any other suitable and/or desired module.

The computers discussed herein may provide a suitable website or other internet-based graphical user interface which is accessible by users. In one embodiment, MICROSOFT^{®} company's Internet Information Services (IIS), Transaction Server (MTS) service, and an SQL SERVER^{®} database, are used in conjunction with MICROSOFT^{®} operating systems, WINDOWS NT^{®} web server software, SQL SERVER^{®} database, and MICROSOFT^{®} Commerce Server. Additionally, components such as ACCESS^{®} software, SQL SERVER^{®} database, ORACLE^{®} software, SYBASE^{®} software, INFORMIX^{®} software, MYSQL^{®} software, INTERBASE^{®} software, etc., may be used to provide an Active Data Object (ADO) compliant database management system. In one embodiment, the APACHE^{®} web server is used in conjunction with a LINUX^{®} operating system, a MYSQL^{®} database, and PERL^{®}, PHP, Ruby, and/or PYTHON^{®} programming languages.

For the sake of brevity, data networking, application development, and other functional aspects of the systems (and components of the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in a practical system.

In various embodiments, the methods described herein are implemented using the various particular machines described herein. The methods described herein may be implemented using the below particular machines, and those hereinafter developed, in any suitable combination, as would be appreciated immediately by one skilled in the art. Further, as is unambiguous from this disclosure, the methods described herein may result in various transformations of certain articles.

In various embodiments, the system and various components may integrate with one or more smart digital assistant technologies. For example, exemplary smart digital assistant technologies may include the ALEXA^{®} system developed by the AMAZON^{®} company, the GOOGLE HOME^{®} system developed by Alphabet, Inc., the HOMEPOD^{®} system of the APPLE^{®} company, and/or similar digital assistant technologies. The ALEXA^{®} system, GOOGLE HOME^{®} system, and HOMEPOD^{®} system, may each provide cloud-based voice activation services that can assist with tasks, entertainment, general information, and more. All the ALEXA^{®} devices, such as the AMAZON ECHO^{®}, AMAZON ECHO DOT^{®}, AMAZON TAP^{®}, and AMAZON FIRE^{®} TV, have access to the ALEXA^{®} system. The ALEXA^{®} system, GOOGLE HOME^{®} system, and HOMEPOD^{®} system may receive voice commands via its voice activation technology, activate other functions, control smart devices, and/or gather information associated with a user presentation. For example, the smart digital assistant technologies may be used to interact with various forms of media (e.g., music, emails, texts, phone calls, question answering, home improvement information, smart home communication/activation, games, shopping, making to-do lists, setting alarms, streaming podcasts, playing audiobooks, and providing weather, traffic, and other real-time information, such as news), and utilize the media in preparing data to be stored for use in a system disclosed herein (e.g., obtain real-time data related to a presentation topic and store the data in a presentation database).

The various system components discussed herein may include one or more of the following: a host server or other computing systems including a processor for processing digital data; a memory coupled to the processor for storing digital data; an input digitizer coupled to the processor for inputting digital data; an application program stored in the memory and accessible by the processor for directing processing of digital data by the processor; a display device coupled to the processor and memory for displaying information derived from digital data processed by the processor; and a plurality of databases. As those skilled in the art will appreciate, a user computer may include an operating system (e.g., WINDOWS^{®}, UNIX^{®}, LINUX^{®}, SOLARIS^{®}, MACOS^{®}, etc.) as well as various support software and drivers typically associated with computers.

The present system or any part(s) or function(s) thereof may be implemented using hardware, software, or a combination thereof and may be implemented in one or more computer systems or other processing systems. However, the manipulations performed by embodiments may be referred to in terms, such as matching or selecting, which are commonly associated with mental operations performed by a human operator. No such capability of a human operator is necessary, or desirable, in most cases, in any of the operations described herein. Rather, the operations may be machine operations or any of the operations may be conducted or enhanced by artificial intelligence ("AI") or machine learning. AI may refer generally to the study of agents (e.g., machines, computer-based systems, etc.) that perceive the world around them, form plans, and make decisions to achieve their goals. Foundations of AI include mathematics, logic, philosophy, probability, linguistics, neuroscience, and decision theory. Many fields fall under the umbrella of AI, such as computer vision, robotics, machine learning, and natural language processing. Useful machines for performing the various embodiments include general purpose digital computers or similar devices. The AI or ML may store data in a decision tree in a novel way.

In various embodiments, the embodiments are directed toward one or more computer systems capable of carrying out the functionalities described herein. The computer system includes one or more processors. The processor is connected to a communication infrastructure (e.g., a communications bus, cross-over bar, network, etc.). Various software embodiments are described in terms of this exemplary computer system. After reading this description, it will become apparent to a person skilled in the relevant art(s) how to implement various embodiments using other computer systems and/or architectures. The computer system can include a display interface that forwards graphics, text, and other data from the communication infrastructure (or from a frame buffer not shown) for display on a display unit.

The computer system also includes a main memory, such as randomaccess memory (RAM), and may also include a secondary memory. The secondary memory may include, for example, a hard disk drive, a solid-state drive, and/or a removable storage drive. The removable storage drive reads from and/or writes to a removable storage unit. As will be appreciated, the removable storage unit includes a computer usable storage medium having stored therein computer software and/or data.

In various embodiments, secondary memory may include other similar devices for allowing computer programs or other instructions to be loaded into a computer system. Such devices may include, for example, a removable storage unit and an interface. Examples of such may include a program cartridge and cartridge interface (such as that found in video game devices), a removable memory chip (such as an erasable programmable read only memory (EPROM), programmable read only memory (PROM), or the like) and associated socket, or other removable storage units and interfaces, which allow software and data to be transferred from the removable storage unit to a computer system.

The terms "computer program medium," "computer usable medium," and "computer-readable medium" are used to generally refer to media such as a removable storage drive and a hard disk installed in a hard disk drive. These computer program products provide software to a computer system.

Meetings and presentations such as keynote or live in-person conferences, other news conferences, public debates, or the like are commonplace today. Typically, at these events there is a speaker or presenter who is communicating information to an audience. These events typically require a presenter to communicate information to a group of people. Additionally, there are often interactions with other participants, such as a question and answer period or the presenter may be part of a panel. These meetings and presentations could happen virtually, in person, or a hybrid. Today, this presenter must either memorize the entire presentation and/or rehearse in order to present a flawless presentation. Often, there may be a slide that they can use for reference, but this is not always the case. Further, in some other events there may be a teleprompter that can be used by the host to read off of, but once again this may not always be available.

Disclosed herein are systems and methods, facilitated through a display device, where the presenter can have access to real-time information, such as notes, tips, analysis data, or the like during a presentation or practicing of a presentation. In various embodiments, the display device can also provide a set of specific notes to the user to help the user with the presentation.

Disclosed herein is a system that includes an audio input device (e.g., a microphone or the like) within the vicinity of the presenter, which will obtain audio data from the presenter (and/or participant's) in response to the presenter (and/or participants) speaking and to use a Natural Language Processing ("NLP") module to determine whether the presenter needs specific notes or data (e.g., whether the presenter missed key points of the presentation, is speaking too fast or slow, skipped a portion of the presentation, or the like). In addition, while the presenter is preparing for their presentation, a personalized generative AI module can monitor and coach the presenter (e.g., providing feedback on analysis of the audio data received from the audio input device). In various embodiments, the coaching can be facilitated by seeding the generative AI module with information about the speech (e.g., background data, such as articles, research, or the like, the planned script of the speech, or the like). In various embodiments, the display device can prompt the user on missed topics, remind he user to present on missed topics, prompt the user on missed portions of the speech, prompt the user on speed of delivery of the speech when the speed of delivery is outside a threshold range, or the like. In various embodiments, the system can also help with fact checking and/or providing answers to questions from audience members or other participants to ensure that the presentation (and/or questions to answers) are accurate.

Disclosed herein is a system including the display device, which the presenter can see during a presentation or during preparation for a presentation, as well as the audio input device. This display device can provide information to the presenter discretely by displaying text to the user. The content of the text would be pre-determined and can be changed in real-time. The presenter can pre-load a transcription of what they would like to say (i.e., a speech) as well as any additional data as described previously herein. The script could be displayed to the user sentence by sentence. The user could also choose to have notes displayed so that the user can remember key points.

Using the NLP module, an audio input device could receive audio data from the user, transmit the audio input data to the NLP module, and present critical information in real-time based on analysis of the audio data, such as missed key points, to provide fact checking, or the like. If an audience member asks a question, the display device could provide some factual information to the user so that the user could answer the question correctly.

All of this information can be fed to a generative artificial intelligence ("AI") module, which could provide real-time coaching by processing the audio data and provide feedback based on the information it is receiving. The generative AI module would be given the information about the underlying areas of the presentation, as well as the speech itself. This previously stored data could allow the generative AI module to have information about any questions that may arise during the presentation, as well as ensure that the speaker is hitting all of the relevant notes in the presentation. The display device could be updated in real-time to ensure that the presentation is accurate.

In various embodiments, the system can be switchable between two operation modes (e.g., a training mode and a presentation mode). For example, in the training mode, the system can be configured to provide a different level of analysis relative to the presentation mode. In this regard, the system can provide feedback on a speed of delivery (e.g., words per minute), whether the speed of delivery is within a predefined range, or the like. Additionally, in various embodiments and in the training mode, the system can provide various breakdown data of the speech including notes on lengthy pauses, stutters, use of crutch words, or the like. In various embodiments, in the presentation mode, the system can be configured to provide more limited data. For example, the system can update a scripted speech in real-time based on how the presenter is presenting (e.g., re-order the script, re-introduce portions of the script that are missed, or the like). In various embodiments, updates to the speech can be highlighted (e.g., in a different color, with a different color background, or the like). In various embodiments, in response to detecting a different portion of the speech, the system can update the speech transcript to the different portion of the speech and/or remove the skipped portion from the speech, in accordance with various embodiments. In various embodiments, in the presentation mode, the system can be configured to provide tips based on the audio data received (e.g., to slow down or speed up the delivery, to pause at certain points, or the like).

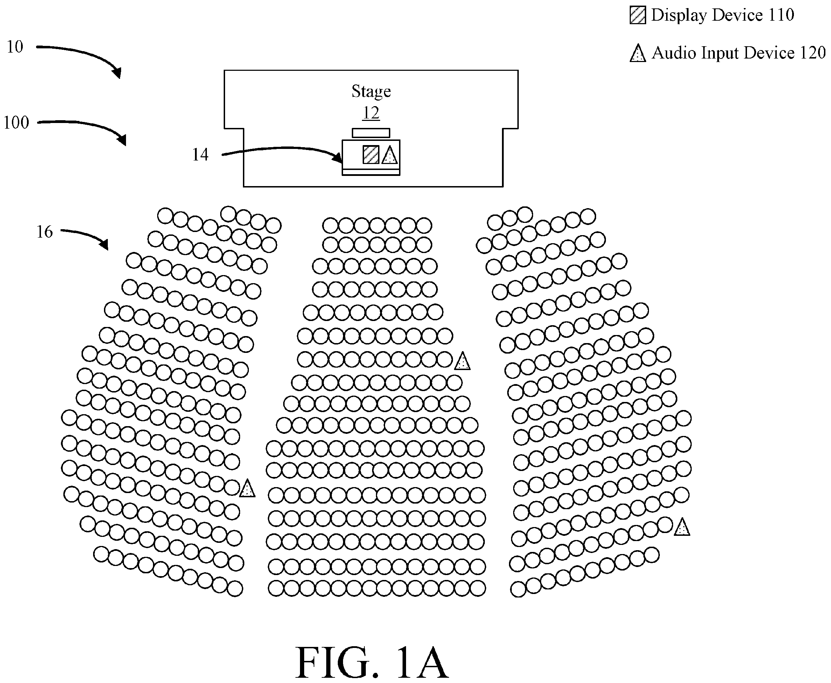

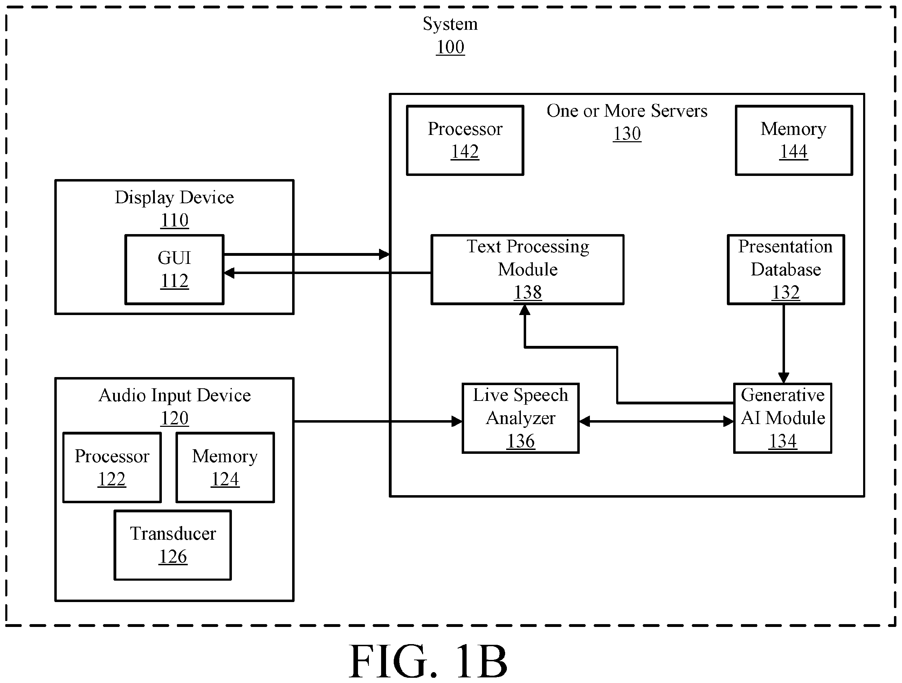

Referring now to FIGs. 1A and 1B, a layout of a venue 10 with a system 100 for digital presentation assistance (FIG. 1A), and a schematic view of the system 100 for digital presentation assistance (FIG. 1B) are illustrated, in accordance with various embodiments. In various embodiments, the venue 10 comprises a stage 12 and a podium 14, and a seating arrangement 16. The system 100 comprises a display device 110, one or more audio input devices 120, and one or more servers 130 (e.g., one or more presentation processing servers). In various embodiments, the display device 110 and an audio input device 120 can be coupled to the podium 14. Although illustrated as being coupled to the podium 14 in the venue 10, the present disclosure is not limited in this regard. For example, the display device 110 can be a separate and distinct component (e.g., a tablet, a laptop, or the like) and be capable of use in various presentation or speech settings (e.g., in a classroom, an office, or the like). In various embodiments, an audio input device in the one or more audio input devices 120 can be proximate a speaker (e.g., in the podium 14). In various embodiments, an audio input device in the one or more audio input devices 120 can be the only audio input device. However, the present disclosure is not limited in this regard. For example, audio input devices 120 can be dispersed through an audience (e.g., through the seating arrangement 16), can be carried to particular attendees in the audience (e.g., during a questions and answers portion), or the like. The present disclosure is not limited in this regard.

The one or more servers 130 are electronically coupled to the display device 110 and the audio input device 120. In various embodiments, the one or more servers 130 are configured to perform various processes as described further herein to facilitate digital presentation assistance.

In various embodiments, components, modules, and/or engines of system 100 may be implemented as micro-applications or micro-apps. Micro-apps are typically deployed in the context of a mobile operating system, including for example, a WINDOWS^{®} mobile operating system, an ANDROID^{®} operating system, an APPLE^{®} iOS operating system, a BLACKBERRY^{®} company's operating system, and the like. The micro-app may be configured to leverage the resources of the larger operating system and associated hardware via a set of predetermined rules which govern the operations of various operating systems and hardware resources. For example, where a micro-app desires to communicate with a device or network other than the mobile device or mobile operating system, the micro-app may leverage the communication protocol of the operating system and associated device hardware under the predetermined rules of the mobile operating system. Moreover, where the micro-app desires an input from a user, the micro-app may be configured to request a response from the operating system which monitors various hardware components and then communicates a detected input from the hardware to the micro-app.

In various embodiments, the display device 110 can comprise any type of display device 110 for displaying text. For example, the display device 110 can comprise a monitor, smart glasses, a tablet, a teleprompter, or the like. The present disclosure is not limited in this regard. In various embodiments, the display device 110 is configured to display a graphical user interface (GUI) 112. In various embodiments, the GUI 112 is in operable communication with the one or more servers 130. In this regard, a user can provide various inputs to the one or more servers through the GUI 112 (e.g., selection of an operating mode, uploading of presentation data to be stored in a presentation database 132 of the one or more servers 130, or the like).

In various embodiments, the audio input device 120 comprises an audio transducer 126 (e.g., a microphone or any other type of input audio transducer configured to convert sound waves into an electrical signal). In various embodiments, the audio transducer 126 is configured to translate sound vibrations in the air into electronic signals (e.g., wireless or wired) and scribe the electronic signals to the one or more servers 130 (e.g., through a live speech analyzer 136, directly to a generative AI module 134, or the like). In this regard, the audio input device 120 is in electronic communication with the one or more servers 130. Although the audio input device 120 is illustrated herein as a separate device from the display device 110 and the one or more servers 130 in the system 100, the present disclosure is not limited in this regard. For example, the audio input device 120 can be a component of the display device 110, the one or more servers 130 can be a component of the audio input device 120, or the like. The present disclosure is not limited in this regard.

In various embodiments, the audio input device 120 can comprise a processor 122 and a memory 124. In this regard, various components of the one or more servers 130 could be implemented on the audio input device 120 and still be within the scope of this disclosure. Although illustrated as having the processor 122 and the memory 124, the audio input device 120 is not limited in this regard. For example, the audio input device 120 could include a microphone including only an audio transducer 126 and still be within the scope of this disclosure.

In various embodiments, the system 100 includes a plurality of the audio input device 120. For example, a speech is often performed in a venue where a questions and answer session may follow thereafter. During the questions and answers sessions, attendees can ask questions through a first audio input device in the one or more audio input devices 120 and the speaker can provide answers through a second audio input device in the one or more audio input devices 120. Accordingly, the system 100 having more than one of the audio input device 120 is within the scope of this disclosure as described further herein.

In various embodiments, the system 100 can further comprise a presentation database 132, a generative AI module 134, a live speech analyzer 136, and a text processing module 138 implemented on the one or more servers 130. The one or more servers 130 may be integrated into a computer system of the system 100 (e.g., in processor 142 and/or memory 144). In various embodiments, the one or more servers 130 may be configured as a central network element or hub to various systems and components of the system 100. In various embodiments, each server in the one or more servers 130 may comprise a processor (e.g., processor 142). In various embodiments, one or more servers 130 may be implemented as a single server (e.g., via a single processor 142 and associated memory 144). In various embodiments, one or more servers 130 may be implemented as multiple servers (e.g., a main processor and local processors for various components, or a decentralized network of main processors). The one or more servers 130 can include a general-purpose processor, a digital signal processor (DSP), an application specific integrated circuit (ASIC), a field programable gate array (FPGA) or other programable logic device, discrete gate or transistor logic, discrete hardware components, or any combination thereof. Each server in the one or more servers 130 may comprise processor 142 configured to implement various logical operations in response to execution of instructions, for example, instructions stored on a non-transitory, tangible, computer-readable medium (e.g., memory 144) configured to communicate with the one or more servers 130. In various embodiments, the one or more servers 130 are servers of a cloud-based system.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

In various embodiments, the presentation database 132 may include relational, hierarchical, graphical, blockchain, object-oriented structure, and/or any other database configurations. The presentation database 132 may also include a flat file structure wherein data may be stored in a single file in the form of rows and columns, with no structure for indexing and no structural relationships between records. For example, a flat file structure may include a delimited text file, a CSV (comma-separated values) file, and/or any other suitable flat file structure. Common database products that may be used to implement the databases include DB2^{®} by IBM^{®} (Armonk, NY), various database products available from ORACLE^{®} Corporation (Redwood Shores, CA), MICROSOFT ACCESS^{®} or MICROSOFT SQL SERVER^{®} by MICROSOFT^{®} Corporation (Redmond, Washington), MYSQL^{®} by MySQL AB (Uppsala, Sweden), MONGODB^{®}, Redis, APACHE CASSANDRA^{®}, HBASE^{®} by APACHE^{®}, MapR-DB by the MAPR^{®} corporation, or any other suitable database product. Moreover, any database may be organized in any suitable manner, for example, as data tables or lookup tables. Each record may be a single file, a series of files, a linked series of data fields, or any other data structure.

Association of certain data may be accomplished through various data association techniques. For example, the association may be accomplished either manually or automatically. Automatic association techniques may include, for example, a database search, a database merge, GREP, AGREP, SQL, using a key field in the tables to speed searches, sequential searches through all the tables and files, sorting records in the file according to a known order to simplify lookup, and/or the like. The association step may be accomplished by a database merge function, for example, using a "key field" in pre-selected databases or data sectors. Various database tuning steps are contemplated to optimize database performance. For example, frequently used files such as indexes may be placed on separate file systems to reduce In/Out ("I/O") bottlenecks.

More particularly, a "key field" partitions the presentation database 132 according to the high-level class of objects defined by the key field. For example, certain types of data may be designated as a key field in a plurality of related data tables and the data tables may then be linked on the basis of the type of data in the key field. The data corresponding to the key field in each of the linked data tables is preferably the same or of the same type. However, data tables having similar, though not identical, data in the key fields may also be linked by using AGREP, for example. In accordance with various embodiments, any suitable data storage technique may be utilized to store data without a standard format. Data sets may be stored using any suitable technique, including, for example, storing individual files using an ISO/IEC 7816-4 file structure; implementing a domain whereby a dedicated file is selected that exposes one or more elementary files containing one or more data sets; using data sets stored in individual files using a hierarchical filing system; data sets stored as records in a single file (including compression, SQL accessible, hashed via one or more keys, numeric, alphabetical by first tuple, etc.); data stored as Binary Large Object (BLOB); data stored as ungrouped data elements encoded using ISO/IEC 7816-6 data elements; data stored as ungrouped data elements encoded using ISO/IEC Abstract Syntax Notation (ASN.1) as in ISO/IEC 8824 and 8825; other proprietary techniques that may include fractal compression methods, image compression methods, or the like.

One skilled in the art will also appreciate that, for security reasons, the presentation database 132 may consist of any combination thereof at a single location or at multiple locations, wherein the presentation database 132 includes any of various suitable security features, such as firewalls, access codes, encryption, decryption, compression, decompression, and/or the like.

In various embodiments, the generative AI module 134 is configured to compute a training objective based on presentation data from the presentation database 132 as described further herein. In this regard, the generative AI module 134 is configured to update a model in real-time based on the training objective and data received from a speech (e.g., through the live speech analyzer 136, directly from the audio input device 120, or the like). In various embodiments, the training objective of the generative AI module 134, as described further herein can include at least one of recommendations or feedback for speeches associated with a presentation. For example, the generative AI module 134 can be trained based on data corresponding to various speeches and presentations to form an ideal speech (e.g., an ideal range for various audio parameters, ideal range for speed of delivery, no use of crutch words, or the like). In various embodiments, the training data can include recorded speeches (e.g., the "I have a Dream" speech by Martin Luther King Jr., Inaugural Address, 1961 by John F. Kennedy Jr., or the like), rules associated with ideal speeches, or the like.

In various embodiments, the generative AI module 134 includes Generative Adversarial Networks (GAN) and/or Variational Autoencoders (VAEs). In this regard, in a GAN model, two machine learning modules can be trained simultaneously, a generator and a discriminator. The generator can create new outputs that resemble the training data, whereas the discriminator can evaluate the generated data and provide feedback to the generator to improve its outputs. In various embodiments, in a VAE model, the generative AI module 134 can utilize a single machine learning model that is trained to encode data into a low-dimensional representation that captures the data's important features, structure, and relationships in a smaller number of dimensions. The model then decodes the low-dimensional representation back into the original data. Essentially, the encoding and decoding processes allow the model to learn a compact representation of the data distribution, which it can then use to generate new output. In various embodiments, the generative AI module 134 is configured to generate new outputs that resemble the training data (e.g., training data associated with recorded speeches, ideal audio parameters for speeches, or the like). In various embodiments, the training data can include templates. For example, the templates can include compilations of speeches from many sources based on the target audience and/or at the speaker's discretion. For example, if the speaker is giving a speech to a technical audience, the source may be drawn from TED talks or tech CEO keynotes. In various embodiments, a user can then select which speeches are relevant to their audience and can include or omit one or more of these pre-delivered speeches.

In various embodiments, the live speech analyzer 136 is configured for natural language processing (NLP). For example, the live speech analyzer 136 can combine computational linguistics-rule-based modeling of human language-with statistical, machine learning, and deep learning models. Together, these technologies enable the system 100 to process human language in the form of voice data (received from the audio input device 120) and to 'understand' its full meaning, complete with the speaker or writer's intent and sentiment.

In various embodiments, the live speech analyzer 136 can be implemented using Python programing language. In this regard, the Python programing language can provide a wide range of tools and libraries for attacking specific NLP tasks. Many of these are found in the Natural Language Toolkit, or natural language toolkit ("NLTK"), an open-source collection of libraries, programs, and education resources for building NLP programs.

In various embodiments, the live speech analyzer 136 is configured for at least one of speech recognition, part of speech tagging, word sense disambiguation, named entity recognition, co-reference resolution, sentiment analysis, natural language generation, or the like. In this regard, the live speech analyzer 136 is configured to break down human audio data (e.g., as received from the audio input device 120) in ways that help the one or more servers 130 (e.g., the generative AI module 134, the text processing module 138, and/or the processor 142) make sense of what the one or more servers 130 is ingesting. "Speech recognition," as referred to herein, includes speech-to-text. For example, speech recognition includes the task of reliably converting voice data (received from the audio input device 120) into text data. "Part of speech tagging," as referred to herein includes grammatical tagging. In this regard, part of speech tagging includes the process of determining the part of speech of a particular word or piece of text based on its use and context. For example, part of speech tagging can identify 'make' as a verb in 'I can make a paper plane,' and as a noun in 'What make of car do you own?' "Word sense disambiguation" as referred to herein is the selection, by the live speech analyzer 136, of the meaning of a word with multiple meanings through a process of semantic analysis that determine the word that makes the most sense in the given context. For example, word sense disambiguation helps distinguish the meaning of the verb 'make' in 'make the grade' (achieve) vs. 'make a bet' (place). Named entity recognition, or NEM, identifies words or phrases as useful entities. NEM identifies 'Kentucky' as a location or 'Fred' as a man's name. "Co-reference resolution," as referred to herein includes the task of identifying if and when two words refer to the same entity. For example, the live speech analyzer 136 can be configured to determine the person or object to which a certain pronoun refers (e.g., 'she' = 'Mary'). In various embodiments "co-reference resolution," can also involve identifying a metaphor or an idiom in the text (e.g., an instance in which 'bear' isn't an animal but a large hairy person). "Sentiment analysis," as referred to herein includes extraction of subjective qualities (e.g., attitudes, emotions, sarcasm, confusion, suspicion, or the like) from audio data (e.g., received from the audio input device 120). "Natural language generation," as referred to herein refers to the task of putting structured information into human language.

In various embodiments, the text processing module 138 can be configured to receive an output from the generative AI module 134 and generate one of a recommendation and feedback to be transmitted through the GUI 112 displayed on the display device 110. Although described herein as including a control module for bidirectional communication with the GUI 112, the present disclosure is not limited in this regard. For example, the text processing module 138 could be a text processor and configured to received data from the generative AI module 134 and output the data to the GUI 112, in accordance with various embodiments. In various embodiments, the text processing module 138 can be configured for topic analysis, sentiment analysis, intent detection, language classification or the like. "Topic analysis," as referred to herein includes the technique (or process) of interpreting and categorizing large collections of text (e.g., that is output from the generative AI module 134) into topics or themes. "Sentiment analysis," as referred to herein includes automatically detecting emotional undertones of text and classifying them as positive, negative, or neutral. "Intent detection" as referred to herein includes a classification model configured to detect an intent, purpose, or goal of a text. For example, intent detection may determine whether the intent is to gain information, make a purchase, or the like. "Language classification," as referred to herein includes classifying text based on which language it's written in.

In various embodiments, the one or more servers 130 can further be configured to receive information from the GUI 112 (e.g., data associated with a prepared presentation to be stored in the presentation database 132). In this regard, in response to receiving presentation data (e.g., a planned written speech, background information on the speech, desired speaking patterns, example speeches to model the speech after, or the like) from the GUI 112, the processor 142 of the one or more servers can store the presentation data in the presentation database 132 for use by the generative AI module 134. In various embodiments, the processer 142 of the one or more servers 130 can also receive operational instructions from the GUI 112 as described further herein (e.g., a selection of a training mode, a presentation mode, or any other operational mode of the system 100). In response to receiving the operational instructions, operational parameters of the one or more servers 130 may be modified in order to modify an output of the GUI 112 for the system 100 as described further herein.

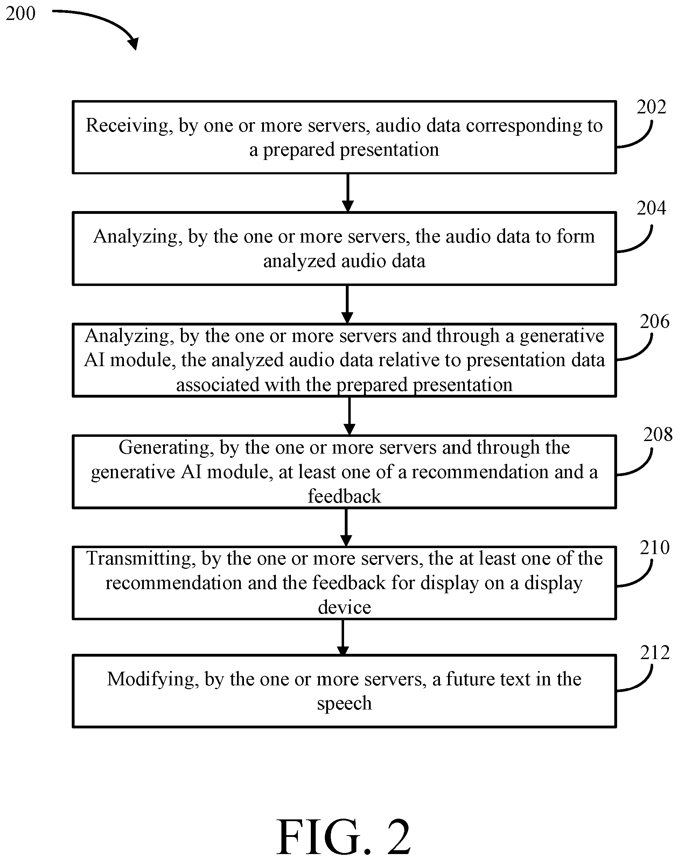

Referring now to FIG. 2, a process 200 performed by the system 100 (e.g., via the one or more servers 130 from FIG. 1B) for providing real-time presentation feedback and/or suggestions is illustrated, in accordance with various embodiments. With combined reference to FIGs. 1B and 2, the process 200 comprises receiving, by the one or more servers 130, audio data corresponding to a prepared presentation (step 202). The audio data can be received from the audio input device 120 as described previously herein. In various embodiments, the audio data can be from more than one of the audio input device 120. The present disclosure is not limited in this regard.

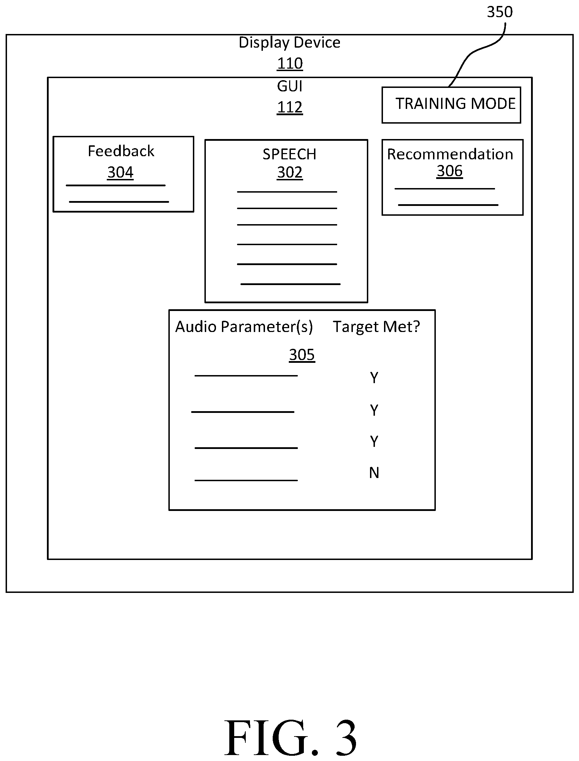

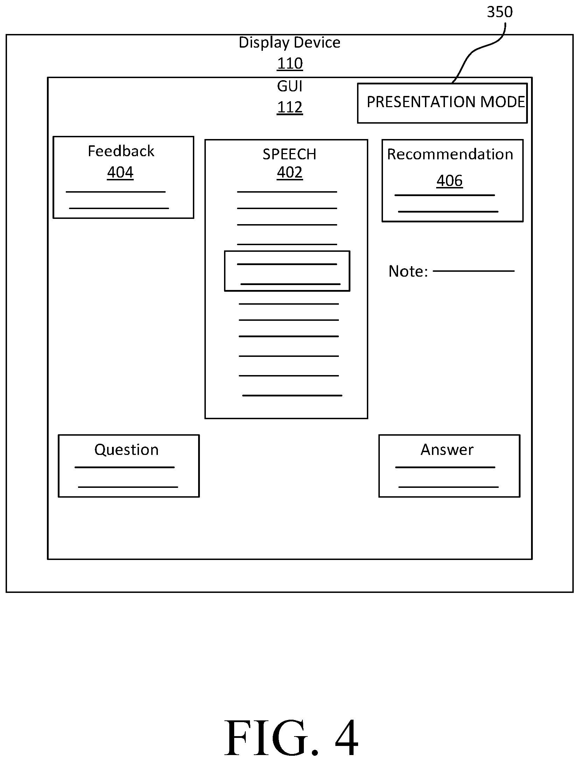

In various embodiments, prior to the one or more servers 130 receiving the audio data, a user may select an operation mode, and modifying, by the one or more servers 130 and based on a selection of the training mode or the presentation mode, an output of the one or more servers 130 to the GUI 112. For example, the process 200 can comprise receiving, by the one or more servers 130, a data input selecting one of a training mode or a presentation mode. In this regard, with brief reference to FIGs. 3 and 4, the GUI 112 can allow a selection of an operational mode of the system 100 through a data input 350 from FIGs. 3 and 4. In various embodiments, the data input 350 displayed through the GUI 112 as shown in FIGs. 3 and 4 can include a drop down, a searchable input, or the like. The present disclosure is not limited in this regard. In various embodiments, the operational modes are not limited to a presentation mode and a training mode. For example, the training mode can be broken down into various subcategories with specific focus areas of the practice, such as tone of voice, pace of speech, inflections, or the like. Similarly, the presentation modes can be tailored to specific types of speeches or presentations (e.g., speech to a crowd without questions and answers, speech to crowd with questions and answers, moderator of a panel, a group presentation, or the like). The present disclosure is not limited in this regard. In various embodiments, as illustrated in FIGs. 3 and 4, based on the selection, an output of the one or more servers 130 that is displayed through the GUI 112 of the display device 110 can be modified as described further herein.

In various embodiments, the process 200 further comprises analyzing, by the one or more servers 130 and through a live speech analyzer 136, the audio data to form analyzed audio data (step 204). In this regard, the live speech analyzer 136 can comprise a Natural Language Processor (NLP) as described previously herein that is configured to receive an electronic signal corresponding to the audio data and perform at least one of speech recognition, part of speech tagging, word sense disambiguation, named entity recognition, co-reference resolution, sentiment analysis, natural language generation, or the like to form the analyzed audio data. In various embodiments, the analyzed audio data can be input into the generative AI module 134 as described further herein.

For example, the process 200 can further comprise analyzing, by the one or more servers 130 and through a generative AI module 134, the analyzed audio data relative to presentation data associated with the prepared presentation (e.g., disposed in the presentation database 132) to form an analyzed presentation data (step 206). In various embodiments, the analyzing the analyzed audio data in step 206 includes comparing a value of an audio parameter to a preferred range of values of the audio parameter. For example, an ideal rate of delivery can be provided in the form of notes and stored in the presentation database 132, an ideal rate of delivery can be determined by the generative AI module 134 from speeches provided in the presentation database 132, an ideal rate of delivery can be determined by the generative AI module 134 based on a training objective (or training data), or the like. The present disclosure is not limited in this regard and various methods for the generative AI module 134 determining an ideal value for an audio parameter and comparing analyzed audio data to the ideal parameter (or a range of the ideal parameter) are within the scope of this disclosure.

In various embodiments, analyzing the analyzed audio data relative to the presentation data in step 206 includes comparing a written speech in the presentation data to a spoken speech in the audio data. For example, the system 100 from FIG. 1B can be configured to detect deviations from the written speech (e.g., speech 302 or speech 402 being displayed through the GUI 112 as shown in FIGs. 3 and 4) and perform a respective action in response to detecting the deviations. In various embodiments, in the training mode of FIG. 3, the system 100, via the one or more servers 130 can move a skipped portion to later in the speech 302, 402, can strike (e.g., delete) the skipped portion, or the like in response to detecting a portion in the speech 302, 402 as being skipped. In various embodiments, in response to a same skipped portion being skipped again, the one or more servers 130 can permanently delete the skipped portion from the speech (e.g., in the presentation mode from FIG. 4) or provide a recommendation 306 to delete the skipped portion from the speech 302 (e.g., in the training mode from FIG. 3).

In various embodiments, the process 200 further comprises generating, by the one or more servers 130 and through the generative AI module 134, at least one of a recommendation and a feedback (step 208). In various embodiments, the feedback can include an indication that the value of the audio parameter is outside the preferred range of values in response to the audio parameter being outside the preferred range of values. For example, a speed of delivery may be desired (or determined by the generative AI module 134) to be between 30 words per minute and 45 words per minute in an exemplary embodiment. In this regard, based on the analyzed audio data received from the live speech analyzer 136 in step 206, the generative AI module 134 can determine whether an actual speed of delivery is within the range defined by the ideal speed of delivery and generate at least one of a recommendation or a feedback based on the comparing. In various embodiments, although described herein as utilizing a generative AI module 134 in step 208, the present disclosure is not limited in this regard. For example, step 208 can be implemented on a typical processor (e.g., processor 142) and a memory (e.g., memory 144) with instructions stored thereon having a predefined range of audio parameters stored therein, in accordance with various embodiments. In various embodiments, by utilizing the generative AI module 134, a user can tailor the user's speech based on particular style of speech or after a particular person without having to research and upload data points for the memory 144 to use. For example, a user can upload various example speeches, talks, presentations, or the like into the presentation database 132 (e.g., speeches the user would like to model the speech after or the like). Similarly, in various embodiments and through the GUI 112, the user can select various audio parameters the user would prefer to be monitored (or modeled after). Accordingly, the feedback and recommendations generated through the GUI 112 can be pre-selected by a user, in accordance with various embodiments.

In various embodiments, the audio parameter comprises at least one of a rate of speech, a tonal parameter, a change in tone, or the like. In various embodiments, the audio parameter(s) can be selected by a user (e.g., through the GUI 112), determined by the generative AI module 134, loaded by the user into the presentation database 132, or the like. The present disclosure is not limited in this regard, and various forms of providing or determining ranges for various audio parameters are within the scope of this disclosure.

In various embodiments, the process 200 can further comprise transmitting, by the one or more servers 130, the at least one of the recommendation and the feedback for display on a display device 110 (e.g., through the GUI 112) (step 210). In this regard, the GUI 112 can provide a user with real-time feedback (e.g., while in a training mode or in a presentation mode) and/or provide a user with an updated speech based on various audio parameters, in accordance with various embodiments. In various embodiments, the text processing module 138 is configured for text processing of data received from the generative AI module 134. Although described herein as including a text processor, the present disclosure is not limited in this regard. For example, the control module can include the processor 142 and the memory 144 with the processor 142 configured to perform various instructions stored on the memory 144. In various embodiments, the generative AI module 134 can be configured to update instructions of each processor 142 of the one or more servers 130 as the generative AI module 134 learns more about the presentation (e.g., from the presentation database 132 and/or through any other training data received by the generative AI module 134).

In various embodiments, transmitting the at least one of the recommendation and the feedback in step 210 is transmitted as text through the display device 110. In various embodiments, the process 200 further comprising transmitting, by the one or more servers 130 and through the text processing module 138, written speech (e.g., speech 302 from FIG. 3 or speech 402 from FIG. 4) from the presentation data associated with the prepared presentation. For example, with reference now to FIGs. 3 and 4, the GUI 112 of the display device 110 while in a training mode (FIG. 3) and while in a presentation mode (FIG. 4) are illustrated, in accordance with various embodiments. In various embodiments, the speech 302, 402 can be displayed through the GUI 112 in both the training mode (FIG. 3) and the presentation mode (FIG. 4). In various embodiments, the speech 302, 402, can highlight words (or portions of words) to display an ideal rate of delivery for the user. In various embodiments, in the training mode, a user can edit the speech 302 by communicating through the audio input device 120 from FIG. 1B. In this regard, a user can make adjustments during preparation of a presentation or speech simply by communicating to the system 100 from FIG. 1B through the audio input device 120. In various embodiments, in both the training mode (FIG. 3) and the presentation mode (FIG. 4), recommendations 306, 406 and/or feedback 304, 404 (e.g., real-time audio parameters 305 in a training mode, or the like) can be provided to a user through the GUI 112.

In various embodiments, the recommendations 306, 406 and/or feedback 304, 404 can include a visual indicator corresponding to a performance parameter. For example, in accordance with various embodiments, the visual indicator can include a color signal (e.g., a green signal indicate "speed ok", a yellow signal indicating "speed to fast", a color next to a parameter indicating whether the performance parameter is good, average, or below average, or the like). The present disclosure is not limited in this regard. In various embodiments, the performance parameter can be any performance parameter for a speech or presentation. For example, the performance parameter can be speed of delivery, tone, speech volume, quantity of crutch words, or the like. Any type of performance parameter for a speech or presentation that is quantifiable is within the scope of this disclosure. In various embodiments, the speech 302, 402 can be modified by the system 100 in manners other than modifying the text. For example, a speed of scrolling for the speech 302, 402, can be modified based on the pace of delivery or other performance factors from the speaker. The present disclosure is not limited in this regard.

In various embodiments, the process 200 can further comprise modifying, by the one or more servers 130, a future text in the speech 302, 402 from FIG. 3 or FIG. 4 based on analyzing the audio data relative to the presentation data associated with the prepared presentation (step 212). In this regard, the speech 302, 402 can be modified (i.e., updated) in real-time based on data received from a user's spoken speech. In various embodiments, the future text can be updated based on maintaining a predetermined range of time for the speech (e.g., in response to a user speaking too slowly, removing portions from later in the speech, or in response to a user speaking too fast, adding portions later in the speech). In various embodiments, the one or more servers 130 can rearrange portions of the speech (e.g., rearrange portions of the speech 302 in the training mode so the user can see how the speech 302 flows differently while practicing). The present disclosure is not limited in this regard and various ways of updating or modifying the speech 302, 402 by a one or more servers 130 from FIG. 1B would be recognized by one skilled in the art and is within the scope of this disclosure.

In various embodiments, the process 200 further comprises comparing, by the one or more servers 130 (e.g., through the generative artificial intelligence (AI) module 134), an actual speech from the analyzed audio data in step 206 to the written speech; and modifying, by the one or more servers 130, the written speech based on the comparing (e.g., in a training mode). Stated another way, the process 200 can allow a user to update a speech while in a training mode. In this regard, a recommendation 306 (or recommendations) can be provided after a practice round by a user and can include recommended updates to the speech based on the presentation. In various embodiments, the recommendation 306 can include updating the speech from the written speech to the spoken speech (or portions of the written speech to the spoken speech) in the training mode. In various embodiments, the recommendation 306 can include entirely new language determined by the generative AI module 134 based on speech patterns of the user, a rate of delivery of the user, tonal parameters at various points in the speech, detecting a struggle by a user in pronouncing certain words or the like. In this regard, the generative AI module 134 can determine alternative words, alternative sentences, an order of the speech that the user may prefer, or the like, and provide recommendations 306 to the user to change the planned speech accordingly, in accordance with various embodiments.

In various embodiments, the modifying the written speech includes differentiating a modified text from original text (e.g., highlighting or the like). In this regard, in response to modifying a speech in real-time (e.g., in a training mode of FIG. 3 or a presentation mode of FIG. 4), any modifications to the previously planned speech can be differentiated by any form of differentiation (e.g., highlighting, a different color, bold, or the like). In various embodiments, "highlighting" as referred to herein can include any form of differentiation between words presented through a GUI 112. For example, highlighting can include modifications in the form of a different background color, a different text color, a bolded text, an italicized text, a different text font, or the like. Any form of differentiation is covered by the term "highlighting" in this disclosure, in accordance with various embodiments.

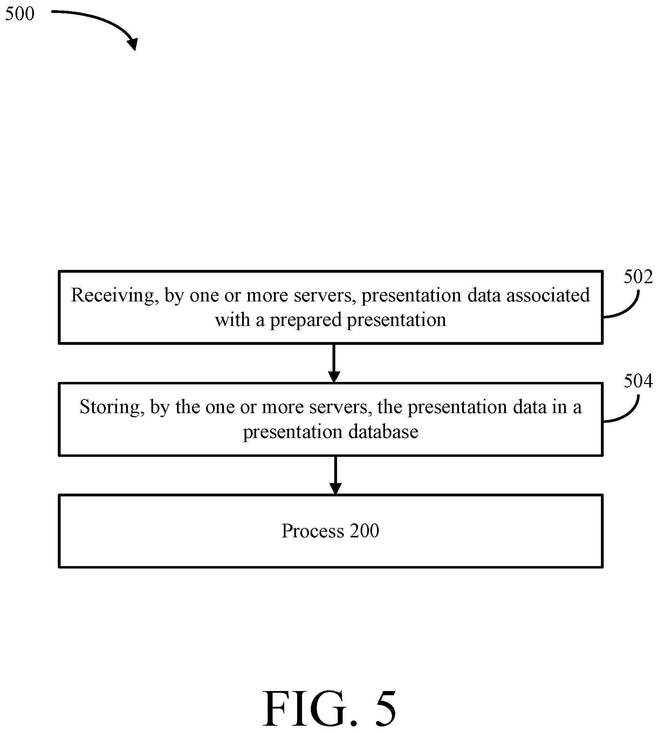

Referring now to FIG. 5, a process 500 performed by the system 100 (e.g., via the one or more servers 130 from FIG. 1B) for providing real-time presentation feedback and/or suggestions is illustrated, in accordance with various embodiments. With combined reference to FIGs. 1B and 5, the process 500 comprises receiving, by the one or more servers 130, presentation data associated with the prepared presentation (step 502). In various embodiments, the presentation data includes a written speech. In various embodiments, the presentation data can be any data that a user may find relevant for a respective speech or presentation. For example, the presentation data can include data related to a topic of the presentation or speech (e.g., research articles related to the topic of the presentation or speech, comparative data related to the topic of the presentation or speech, key points of the presentation or speech, or the like), data associated with specific speaking styles (e.g., video or audio speeches from speakers the user intends to model the speech or presentation after, parameters related to a desired pace of speech, or the like) data associated with a target impression on the audience (e.g., motivated for giving in the case of speaking at a charity, motivated to invest in a company for a pitch to investors, or the like), speech or presentation parameters (e.g., a speech length, a range for the potential speech length, or the like). The present disclosure is not limited in this regard and various types of data can be considered by a user as being relevant to the speech or presentation and still be within the scope of this disclosure. In various embodiments, the process 500 can further comprise storing, by the one or more servers 130 and through a presentation database 132, the presentation data (step 504), and performing the process 200 from FIG. 2 thereafter.

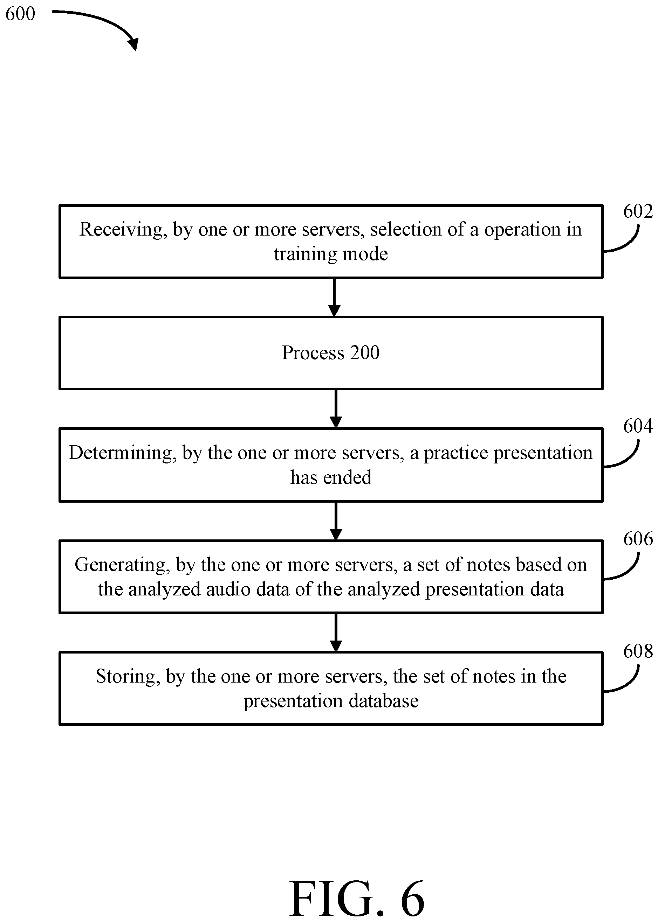

Referring now to FIG. 6, a process 600 performed by the system 100 (e.g., via the one or more servers 130 from FIG. 1B) for providing real-time presentation feedback and/or suggestions is illustrated, in accordance with various embodiments. With combined reference to FIGs. 1B and 6, the process 600 comprises receiving, by the one or more servers 130, a selection of operational mode for the system 100 in a training mode (step 602). In response to receiving the selection, the system 100 can operate in accordance with the process 200 as described previously herein with a GUI 112 in accordance with the GUI 112 from FIG. 3, in accordance with various embodiments.

In various embodiments, after the process 200 from FIG. 2 is performed, the process 600 comprises determining, by the one or more servers, a practice presentation has ended (step 604). In various embodiments, the determining step 604 can be performed in various ways. For example, the user can indicate that the practice presentation is over by stating the practice presentation is ended verbally (e.g., if the user wants to end the practice presentation early or start over), the one or more servers 130 can determine that the predetermined script has ended and the user has stopped speaking for a predetermined period of time, the generative AI module 134 can determine that the user is no longer talking about the topic of the presentation as provided in the presentation data, or the like. The present disclosure is not limited in this regard.

In various embodiments, the process 600 further comprises generating, by the one or more servers 130, a set of notes based on the analyzed audio data and the analyzed presentation data (step 606). In various embodiments, the set of notes can be in standard data format, the notes can be in a written format (e.g., for display to a user through the GUI 112), or the like. The present disclosure is not limited in this regard. In various embodiments the set of notes can include feedback and/or suggestions. For example, the set of notes can include data related to the practice speech, identify problem areas in the speech (e.g., problem areas based on vocals, flow, transitions, use of crutch words, or the like), in accordance with various embodiments. In various embodiments, the set of notes can include suggested edits to the written speech and display the suggested edits to the user through the GUI 112. In various embodiments, the user can accept, deny, or modify the suggested edits through the GUI 112. In various embodiments, the user can verbally accept the suggested edits. The present disclosure is not limited in this regard.

In various embodiments, the process 600 further comprises storing, by the one or more servers 130, the set of notes in a presentation database 132 (step 608). In this regard, the set of notes can be utilized by the generative AI module 134 to provide real-time feedback and/or suggestions in the training mode and/or in the presentation mode based on the set of notes.

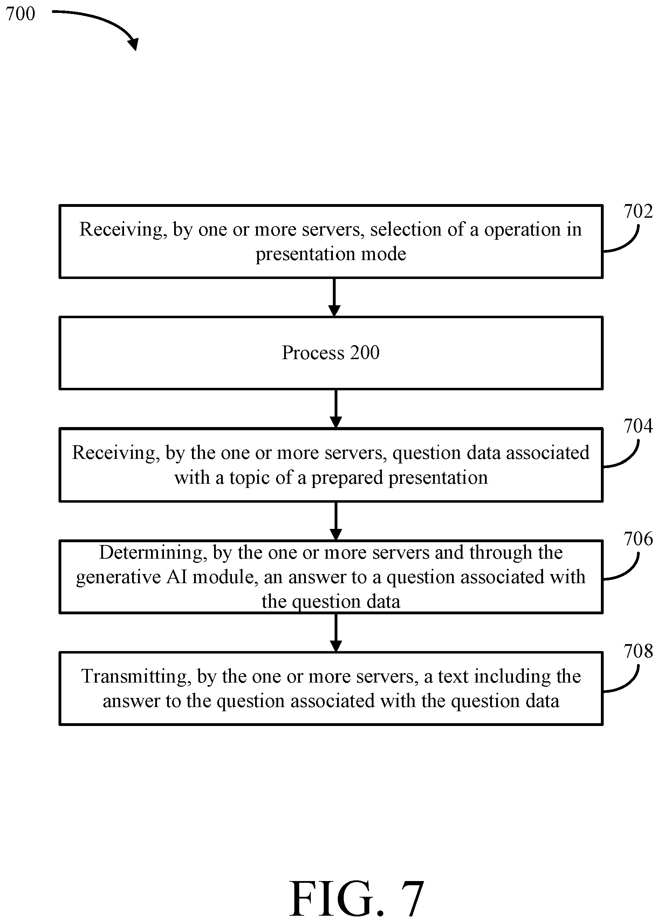

Referring now to FIG. 7, a process 700 performed by the system 100 (e.g., via the one or more servers 130 from FIG. 1B) for providing real-time presentation feedback and/or suggestions is illustrated, in accordance with various embodiments. With combined reference to FIGs. 1B and 7, the process 700 comprises receiving, by the one or more servers 130, a selection of operation for the system 100 in a presentation mode (step 702). In response to receiving the selection, the system 100 can operate in accordance with the process 200 as described previously herein with a GUI 112 in accordance with the GUI 112 from FIG. 3, in accordance with various embodiments. In various embodiments, the selection of presentation mode can further include a sub-selection of a type of presentation or speech as described previously herein.

In various embodiments, after the process 700 from FIG. 2 is performed, the process 600 comprises receiving, by the one or more servers 130 and through the live speech analyzer 136, question data associated with a topic of the prepared presentation (step 704). For example, with brief reference to FIG. 1A, the question data can be received from a respective audio input device 120. The audio input device 120 can be disposed in a fixed location proximate an attendee asking a question, or the audio input device 120 can be transportable to a respective attendee (e.g., via a wireless microphone or the like). In this regard, the audio input device 120 can be in electronic communication with the system (e.g., wired in the case of a fixed location, wireless, such as Bluetooth^{®}, through a network, or the like).

In various embodiments, the process 700 further comprises determining, by the one or more servers 130 and through the generative AI module 134, an answer to a question associated with the question data (step 706). In various embodiments, the answer can be determined by analyzing data that is stored in the presentation database 132. However, the present disclosure is not limited in this regard. For example, the generative AI module 134 can retrieve data from an open source (e.g., the Internet) in order to generate an answer based on the particular question received by the system 100, in accordance with various embodiments.

In various embodiments, the process 700 further comprises transmitting, by the one or more servers 130 and through the text processing module 138, a text including the answer to the question associated with the question data (step 708). In this regard, a user (e.g., a speaker) can review the answer and use the answer, or portions of the answer in responding to the questions. Similar to other steps of process 200, the written answer provided through the GUI 112 can be modified (or updated) in real-time based on data received from the user in responding to the question. Stated another way, the system 100 can perform process 200 for a user responding to questions in a similar manner the system 100 performs process 200 for a presentation.

Benefits, other advantages, and solutions to problems have been described herein regarding specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims.

Systems, methods, and computer program products are provided. In the detailed description herein, references to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A method for providing real-time presentation feedback, the method comprising:
receiving, by one or more servers (130), audio data corresponding to a prepared presentation;
analyzing, by the one or more servers and through a live speech analyzer (136), the audio data to form analyzed audio data;
analyzing, by the one or more servers and through a generative artificial intelligence (AI) module (134), the analyzed audio data relative to presentation data associated with the prepared presentation to form an analyzed presentation data, the presentation data comprising written speech text (302, 402);
generating, by the one or more servers and through the generative artificial intelligence (AI) module, at least one of a recommendation (306, 406) and a feedback (304, 404);
transmitting, by the one or more servers and through a processor (142), the at least one of the recommendation and the feedback for display on a display device (110); and
modifying, by the one or more servers and through the processor, a future speech text in the written speech text (302, 402) based on the analyzing the audio data relative to the presentation data associated with the prepared presentation.

2. The method of claim 1, wherein:
the analyzing the audio data includes comparing a value of an audio parameter to a preferred range of values of the audio parameter, and
the feedback includes an indication that the value of the audio parameter is outside the preferred range of values in response to the audio parameter being outside the preferred range of values.

3. The method of claim 2, wherein the audio parameter comprises at least one of a rate of speech, a tonal parameter, and a change in tone.

4. The method of any preceding claim, wherein the transmitting the at least one of the recommendation and the feedback is transmitted as text through the display device (110).

5. The method of any preceding claim, wherein the analyzing the audio data relative to the presentation data includes comparing a written speech in the presentation data to a spoken speech in the audio data.

6. The method of any preceding claim, further comprising transmitting, by the one or more servers (130) and through the processor (142), a written speech from the presentation data associated with the prepared presentation.

7. The method of claim 6, further comprising:
comparing, by the one or more servers (130) and through the generative artificial intelligence (AI) module (134), an actual speech from the audio data to the written speech; and
modifying, by the one or more servers (130), the written speech based on the comparing and optionally wherein the modifying the written speech includes differentiating a modified text from original text.

8. The method of any preceding claim, further comprising:
receiving, by the one or more servers (130), the presentation data associated with the prepared presentation, the prepared presentation including a written speech; and
storing, by the one or more servers (130) and through a presentation database (132), the presentation data.

9. The method of any preceding claim, further comprising receiving, by the one or more servers (130), a data input selecting one of a training mode or a presentation mode and optionally further comprising modifying, by the one or more servers (130) and based on a selection of the training mode or the presentation mode, an output from the one or more servers.

10. The method of any preceding claim, further comprising:
determining, by the one or more servers (130), a practice presentation has ended;
and
generating, by the one or more servers (130), a set of notes based on the analyzed audio data and the analyzed presentation data.

11. The method of claim 10, further comprising storing the set of notes in a presentation database (132) and optionally wherein the presentation data associated with the prepared presentation includes the set of notes.

12. The method of any preceding claim, further comprising:
receiving, by the one or more servers (130) and through the live speech analyzer (136), question data associated with a topic of the prepared presentation;
determining, by the one or more servers (130) and through the generative artificial intelligence (AI) module (134), an answer to a question associated with the question data; and
transmitting, by the one or more servers (130) and through the processor (142), a text including the answer to the question associated with the question data.

13. A non-transitory computer-readable storage medium comprising instructions which, when executed by a computer, cause the computer to carry out the steps of the method of any of claims 1 to 12.

14. A system (100) for digital presentation assistance, the system comprising:
a display device (110);
an audio input device (120); and
one or more servers (130) electronically coupled to the display device and the audio input device, the one or more servers configured to:
receive, through the audio input device, audio data corresponding to a prepared presentation;
analyze, through a generative artificial intelligence (AI) module (134) of the one or more servers, the audio data relative to stored presentation data to form an analyzed presentation data, the presentation data comprising written speech text (302, 402); and
transmit, through the display device (110), at least one of a recommendation (306, 406) and a feedback (304, 404) based on the analyzed presentation data; and
modify, through a processor (142), a future speech text in the written speech text (302, 402) based on the analysis of the audio data relative to the presentation data associated with the prepared presentation.

## Patentansprüche

1. Verfahren zum Bereitstellen von Echtzeit-Präsentationsrückmeldungen, wobei das Verfahren Folgendes umfasst:
Empfangen, durch einen oder mehrere Server (130), von Audiodaten, die einer vorbereiteten Präsentation entsprechen;
Analysieren, durch den einen oder die mehreren Server und durch einen Live-Sprachanalysator (136), der Audiodaten, um analysierte Audiodaten zu bilden;
Analysieren, durch den einen oder die mehreren Server und durch ein Modul (134) für generative künstliche Intelligenz (AI), der analysierten Audiodaten in Bezug auf Präsentationsdaten, die der vorbereiteten Präsentation zugeordnet sind, um analysierte Präsentationsdaten zu bilden, wobei die Präsentationsdaten geschriebenen Redetext (302, 402) umfassen;
Generieren, durch den einen oder die mehreren Server und durch das Modul für generative künstliche Intelligenz (AI), mindestens einer von einer Empfehlung (306, 406) und einer Rückmeldung (304, 404);
Übertragen, durch den einen oder die mehreren Server und durch einen Prozessor (142), der mindestens einen von der Empfehlung und der Rückmeldung zur Anzeige auf einer Anzeigevorrichtung (110); und
Modifizieren, durch den einen oder die mehreren Server und durch den Prozessor, eines zukünftigen Redetextes in dem geschriebenen Redetext (302, 402)
basierend auf dem Analysieren der Audiodaten in Bezug auf die Präsentationsdaten, die der vorbereiteten Präsentation zugeordnet sind.

2. Verfahren nach Anspruch 1, wobei:
das Analysieren der Audiodaten das Vergleichen eines Werts eines Audioparameters mit einem bevorzugten Wertebereich des Audioparameters beinhaltet, und
die Rückmeldung eine Angabe beinhaltet, dass der Wert des Audioparameters außerhalb des bevorzugten Wertebereichs ist, als Reaktion darauf, dass der Audioparameter außerhalb des bevorzugten Wertebereichs ist.

3. Verfahren nach Anspruch 2, wobei der Audioparameter mindestens eines von einer Redegeschwindigkeit, einem tonalen Parameter und einer Tonänderung umfasst.

4. Verfahren nach einem vorhergehenden Anspruch, wobei das Übertragen der mindestens einen von der Empfehlung und der Rückmeldung als Text durch die Anzeigevorrichtung (110) übertragen wird.

5. Verfahren nach einem vorhergehenden Anspruch, wobei das Analysieren der Audiodaten in Bezug auf die Präsentationsdaten das Vergleichen einer geschriebenen Rede in den Präsentationsdaten mit einer gesprochenen Rede in den Audiodaten beinhaltet.

6. Verfahren nach einem vorhergehenden Anspruch, ferner umfassend das Übertragen, durch den einen oder die mehreren Server (130) und durch den Prozessor (142), einer geschriebenen Rede aus den Präsentationsdaten, die der vorbereiteten Präsentation zugeordnet sind.

7. Verfahren nach Anspruch 6, ferner umfassend:
Vergleichen, durch den einen oder die mehreren Server (130) und durch das Modul (134) für generative künstliche Intelligenz (AI), einer tatsächlichen Rede aus den Audiodaten mit der geschriebenen Rede; und
Modifizieren, durch den einen oder die mehreren Server (130), der geschriebenen Rede basierend auf dem Vergleichen, und optional wobei das Modifizieren der geschriebenen Rede das Unterscheiden eines modifizierten Textes von Ursprungstext beinhaltet.

8. Verfahren nach einem vorhergehenden Anspruch, ferner umfassend:
Empfangen, durch den einen oder die mehreren Server (130), der Präsentationsdaten, die der vorbereiteten Präsentation zugeordnet sind, wobei die vorbereitete Präsentation eine geschriebene Rede beinhaltet; und
Speichern, durch den einen oder die mehreren Server (130) und durch eine Präsentationsdatenbank (132), der Präsentationsdaten.

9. Verfahren nach einem vorhergehenden Anspruch, ferner umfassend das Empfangen, durch den einen oder die mehreren Server (130), einer Dateneingabe, die einen von einem Trainingsmodus oder einem Präsentationsmodus auswählt, und optional ferner umfassend das Modifizieren, durch den einen oder die mehreren Server (130) und basierend auf einer Auswahl des Trainingsmodus oder des Präsentationsmodus, einer Ausgabe von dem einen oder den mehreren Servern.

10. Verfahren nach einem vorhergehenden Anspruch, ferner umfassend:
Bestimmen, durch den einen oder die mehreren Server (130), dass eine Übungspräsentation beendet ist; und
Generieren, durch den einen oder die mehreren Server (130), eines Satzes von Notizen basierend auf den analysierten Audiodaten und den analysierten Präsentationsdaten.

11. Verfahren nach Anspruch 10, ferner umfassend das Speichern des Satzes von Notizen in einer Präsentationsdatenbank (132) und optional wobei die Präsentationsdaten, die der vorbereiteten Präsentation zugeordnet sind, den Satz von Notizen beinhalten.

12. Verfahren nach einem vorhergehenden Anspruch, ferner umfassend:
Empfangen, durch den einen oder die mehreren Server (130) und durch den Live-Sprachanalysator (136), von Fragedaten, die einem Thema der vorbereiteten Präsentation zugeordnet sind;
Bestimmen, durch den einen oder die mehreren Server (130) und durch das Modul (134) für generative künstliche Intelligenz (AI), einer Antwort auf eine Frage, die den Fragedaten zugeordnet ist; und
Übertragen, durch den einen oder die mehreren Server (130) und durch den Prozessor (142), eines Textes, der die Antwort auf die Frage beinhaltet, die den Fragedaten zugeordnet ist.

13. Nichtflüchtiges computerlesbares Speichermedium, umfassend Anweisungen, die, wenn sie von einem Computer ausgeführt werden, den Computer veranlassen, die Schritte des Verfahrens nach einem der Ansprüche 1 bis 12 durchzuführen.

14. System (100) zur digitalen Präsentationsunterstützung, wobei das System Folgendes umfasst:
eine Anzeigevorrichtung (110);
eine Audioeingabeeinrichtung (120); und
einen oder mehrere Server (130), die elektronisch an die Anzeigevorrichtung und die Audioeingabevorrichtung gekoppelt sind, wobei der eine oder die mehreren Server zu Folgendem konfiguriert sind:
Empfangen, durch die Audioeingabevorrichtung, von Audiodaten, die einer vorbereiteten Präsentation entsprechen;
Analysieren, durch ein Modul (134) für generative künstliche Intelligenz (AI) des einen oder der mehreren Server, der Audiodaten in Bezug auf gespeicherte Präsentationsdaten, um analysierte Präsentationsdaten zu bilden, wobei die Präsentationsdaten geschriebenen Redetext (302, 402) umfassen; und
Übertragen, durch die Anzeigevorrichtung (110), mindestens einer von einer Empfehlung (306, 406) und einer Rückmeldung (304, 404) basierend auf den analysierten Präsentationsdaten; und
Modifizieren, durch einen Prozessor (142), eines zukünftigen Redetextes in dem geschriebenen Redetext (302, 402) basierend auf der Analyse der Audiodaten in Bezug auf die Präsentationsdaten, die der vorbereiteten Präsentation zugeordnet sind.

## Revendications

1. Procédé permettant de fournir une rétroaction de présentation en temps réel, le procédé comprenant :
la réception, par un ou plusieurs serveurs (130), de données audio correspondant à une présentation préparée ;
l'analyse, par l'un ou plusieurs serveurs et par l'intermédiaire d'un analyseur de parole en direct (136), des données audio pour former des données audio analysées ;
l'analyse, par l'un ou plusieurs serveurs et par l'intermédiaire d'un module d'intelligence artificielle (IA) générative (134), des données audio analysées par rapport aux données de présentation associées à la présentation préparée pour former des données de présentation analysées, les données de présentation comprenant un texte vocal écrit (302, 402) ;
la génération, par l'un ou plusieurs serveurs et par l'intermédiaire du module d'intelligence artificielle (IA) générative, d'au moins une d'une recommandation (306, 406) et d'une rétroaction (304, 404) ;
la transmission, par l'un ou plusieurs serveurs et par l'intermédiaire d'un processeur (142), de l'au moins une de la recommandation et de la rétroaction pour affichage sur un dispositif d'affichage (110) ; et
la modification, par l'un ou plusieurs serveurs et par l'intermédiaire du processeur, d'un futur texte vocal dans le texte vocal écrit (302, 402) sur la base de l'analyse des données audio par rapport aux données de présentation associées à la présentation préparée.

2. Procédé selon la revendication 1, dans lequel :
l'analyse des données audio comprend la comparaison d'une valeur d'un paramètre audio à une plage de valeurs préférée du paramètre audio, et
la rétroaction comprend une indication que la valeur du paramètre audio se trouve en dehors de la plage de valeurs préférée en réponse au fait que le paramètre audio se trouve en dehors de la plage de valeurs préférée.

3. Procédé selon la revendication 2, dans lequel le paramètre audio comprend au moins l'un d'un taux de parole, d'un paramètre de tonalité et d'un changement de tonalité.

4. Procédé selon l'une quelconque des revendications précédentes, dans lequel la transmission de l'au moins une de la recommandation et de la rétroaction est transmise sous forme de texte par l'intermédiaire du dispositif d'affichage (110).

5. Procédé selon l'une quelconque des revendications précédentes, dans lequel l'analyse des données audio par rapport aux données de présentation comprend la comparaison d'une parole écrite dans les données de présentation à une parole énoncée dans les données audio.

6. Procédé selon l'une quelconque des revendications précédentes, comprenant en outre la transmission, par l'un ou plusieurs serveurs (130) et par l'intermédiaire du processeur (142), d'une parole écrite provenant des données de présentation associées à la présentation préparée.

7. Procédé selon la revendication 6, comprenant en outre :
la comparaison, par l'un ou plusieurs serveurs (130) et par le biais du module d'intelligence artificielle (IA) générative (134), d'une parole réelle provenant des données audio à la parole écrite ; et
la modification, par l'un ou plusieurs serveurs (130), de la parole écrite sur la base de la comparaison et éventuellement dans lequel la modification de la parole écrite comprend la différenciation d'un texte modifié à partir du texte original.

8. Procédé selon l'une quelconque des revendications précédentes, comprenant en outre :
la réception, par l'un ou plusieurs serveurs (130), des données de présentation associées à la présentation préparée, la présentation préparée comprenant une parole écrite ; et
le stockage, par l'un ou plusieurs serveurs (130) et par l'intermédiaire d'une base de données de présentation (132), des données de présentation.

9. Procédé selon l'une quelconque des revendications précédentes, comprenant en outre la réception, par l'un ou plusieurs serveurs (130), d'une entrée de données sélectionnant l'un d'un mode d'apprentissage ou d'un mode de présentation et comprenant en outre éventuellement la modification, par l'un ou plusieurs serveurs (130) et sur la base d'une sélection du mode d'apprentissage ou du mode de présentation, d'une sortie provenant de l'un ou plusieurs serveurs.

10. Procédé selon l'une quelconque des revendications précédentes, comprenant en outre :
la détermination, par l'un ou plusieurs serveurs (130), qu'une présentation de pratique a pris fin ; et
la génération, par l'un ou plusieurs serveurs (130), d'un ensemble de notes sur la base des données audio analysées et des données de présentation analysées.

11. Procédé selon la revendication 10, comprenant en outre le stockage de l'ensemble de notes dans une base de données de présentation (132) et éventuellement dans lequel les données de présentation associées à la présentation préparée comprennent l'ensemble de notes.

12. Procédé selon l'une quelconque des revendications précédentes, comprenant en outre :
la réception, par l'un ou plusieurs serveurs (130) et par l'intermédiaire de l'analyseur de parole en direct (136), de données de question associées à un sujet de la présentation préparée ;
la détermination, par l'un ou plusieurs serveurs (130) et par le biais du module d'intelligence artificielle (IA) générative (134), d'une réponse à une question associée aux données de question ; et
la transmission, par l'un ou plusieurs serveurs (130) et par l'intermédiaire du processeur (142), d'un texte comprenant la réponse à la question associée aux données de question.

13. Support de stockage lisible par ordinateur non transitoire comprenant des instructions qui, lorsqu'elles sont exécutées par un ordinateur, amènent l'ordinateur à effectuer les étapes du procédé selon l'une quelconque des revendications 1 à 12.

14. Système (100) d'assistance à la présentation numérique, le système comprenant :
un dispositif d'affichage (110) ;
un dispositif d'entrée audio (120) ; et
un ou plusieurs serveurs (130) couplés électroniquement au dispositif d'affichage et au dispositif d'entrée audio, l'un ou plusieurs serveurs étant configurés pour :
recevoir, par l'intermédiaire du dispositif d'entrée audio, des données audio correspondant à une présentation préparée ;
analyser, par le biais d'un module d'intelligence artificielle (IA) générative (134) de l'un ou plusieurs serveurs, les données audio par rapport aux données de présentation stockées pour former des données de présentation analysées, les données de présentation comprenant un texte vocal écrit (302, 402) ; et
transmettre, par le biais du dispositif d'affichage (110), au moins une d'une recommandation (306, 406) et d'une rétroaction (304, 404) sur la base des données de présentation analysées ; et
modifier, par l'intermédiaire d'un processeur (142), un futur texte vocal dans le texte vocal écrit (302, 402) sur la base de l'analyse des données audio par rapport aux données de présentation associées à la présentation préparée.
